# EUROPEAN PATENT SPECIFICATION

(11) **EP 2 959 637 B1**
(45) Date of publication and mention of the grant of the patent: **06.09.2017**
(21) Application number: 14706674.0
(22) Date of filing: 19.02.2014
(51) Int. Cl.: H04L 12/26

(54) **A METHOD OF, AND APPARATUS FOR, MONITORING TRAFFIC IN A COMMUNICATIONS NETWORK**
VERFAHREN UND VORRICHTUNG ZUR VERKEHRSÜBERWACHUNG IN EINEM KOMMUNIKATIONSNETZ
PROCÉDÉ ET APPAREIL DE SURVEILLANCE DU TRAFIC DANS UN RÉSEAU DE COMMUNICATIONS

(30) Priority: 20.02.2013 GB 201302984
(43) Date of publication of application: 30.12.2015
(73) Proprietor: Nominet UK, Oxford, Oxfordshire OX4 4DQ (GB)
(72) Inventor: BELLIS, Raymond Peter, Oxford Oxfordshire OX4 4DQ (GB); ARENDS, Roy Bernard Herman, Oxford Oxfordshire OX4 4DQ (GB)
(74) Representative: J A Kemp
(86) International application number: PCT/GB2014/050487
(87) International publication number: WO 2014/128463

(56) References cited:
- US-A1- 2012 005 330
- US-A1- 2013 010 600
- US-B1- 6 523 022
- BERTRAND G ET AL: "CDNI Logging Interface; draft-ietf-cdni-logging-00.txt", CDNI LOGGING INTERFACE; DRAFT-IETF-CDNI-LOGGING-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 10 December 2012 (2012-12-10), pages 1-43, XP015089044, [retrieved on 2012-12-10]

## Description

The invention relates to a method of monitoring traffic in a communications network and an apparatus for monitoring traffic in a communications network. In a preferred embodiment of the invention, the method or apparatus monitors network protocol traffic (in the form of network packets) observed passing between computers connected via a communications network.

Network packets are typically composed of many attributes, packed into data fields in a protocol-specific manner within a packet of data sent over a communications network.

In one example, the network packets comprise requests and corresponding responses adhering to the Domain Name System (DNS) protocol as specified in RFC 1034, RFC 1035, and subsequent documents that amended the core specification (e.g. RFC 2671). The DNS is a fundamental component of the Internet, designed as a database system that translates a computer's domain name into an IP address. DNS allows connection to another networked computer or remote service by interpreting the user-friendly domain name rather than its numerical IP address. For example, a "DNS Request", containing a domain name will be processed by a DNS Server and will return a "DNS Response" containing the IP address. At first sight, DNS seems a simple process, but due to mechanisms that deal with DNS server hierarchy, redundancy, error messages and caching, the system is rather more complicated. DNS Requests typically vary in length from 20 to 60 bytes, and DNS Responses may typically vary in length from 50 bytes through to 4096 bytes.

To successfully manage a practical DNS system it is desirable for the DNS operator to have access to systems that monitor DNS performance. DNS performance depends on the efficient running of the DNS Server as well as the frequency and type of DNS Requests coming from the Internet. With over 4 Billion IP addresses on the Internet, it is theoretically possible for any of these IP address sources to impair the performance of the DNS server by sending erroneous DNS Requests to the server. Whilst it is often the case that such erroneous DNS Requests are the result of some accidental poorly performing Internet-connected computer, the nature of the Internet is such that there is an increasing number of "contrived" DNS Request events which are deliberately designed to attack the performance of the DNS server. To be able to monitor, isolate and mitigate against such deliberate attacks requires sophisticated monitoring of the DNS Requests and the associated DNS Responses.

The monitoring and analysis of network communications traffic, such as DNS requests and responses, serves many purposes, including (but not limited to):
- Capacity planning
- Detection of non-compliant requests and/or responses
- Analysis of usage patterns

However, there are problems in providing tools for monitoring and analysing such communications, including: the sheer volume of data when there are literally billions of requests processed every day; the variable nature of the responses; and enabling the data to be efficiently interrogated.

US 2012/0005330 A1 discloses an information handling device that detects that multiple flows each include a common transaction-specific identifier. The identifier corresponds to a transaction and is generated in response to receiving a request over a network. The information handling device, in turn, logs data pertaining to each of the detected plurality of flows in a storage area. When the information handling device identifies a completion of the transaction, the information handling device calculates a total cost of the transaction using the logged data pertaining to each of the pluralities of flows.

US 2013/0010600 A1 discloses a method performed by a network element implementing an OpenFlow controller, the OpenFlow controller including an OAM module. The OAM module services an OAM function request in a network implementing OpenFlow. The method requests that a subset of OpenFlow switches in the network report metrics for an OpenFlow data flow to provide the OAM module with information for executing the requested OAM function. The method includes receiving by an OAM module a request to execute the OAM function, generating a trigger monitoring message defining actions to be performed by an open flow switch, wherein the actions are to provide the metrics for the OpenFlow data flow, receiving a plurality of monitor response messages, each including the metrics for the OpenFlow data flow, correlating the plurality of monitor response messages with the OAM function request, executing the request OAM function, and returning a result of the requested OAM function.

US 6 523 022 B1 discloses a method which: (i) stores a plurality of predetermined authentication procedures to gain admittance to databases, (ii) stores the Universal Resource Locators of intranet and internet addresses of a plurality of expert-predetermined optimum databases; (iii) stores a plurality of expert-predetermined optimum queries for use in the search engine of each of the preselected databases, each query representing a discrete searchable concept as expressed by a work, phrase, sentence or paragraph of text, or any other media such as audio and video on a website, or other network resource; and (iv) presents to the user the results of a search of the database through a GUI which coordinates and correlates fewer selection criteria with the expert optimum remote databases selection and queries.

BERTRAND G ET AL: "CDNI Logging Interface; draft-ietf-cdni-logging-OO.txt", CDNI LOGGING INTERFACE; DRAFT-IETF-CDNI-LOGGING-OO.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 10 December 2012 (2012-12-10), pages 1-43, XP015089044, pages 5-7 discloses a logging interface between a downstream CDN and an upstream CDN that are interconnected as per the CDNI framework. A reference model for CDNI logging is described. The protocol for CDNI logging information exchanges covering the information elements as well as the transport of those is specified.

The present invention seeks to alleviate, at least partially some or any of the above problems.

The scope of the invention is defined in the appended claims.

Embodiments of the invention will now be described, by way of example only, with reference to the accompanying drawings in which:
Figure 1 is a schematic illustration of an apparatus for matching request-response pairs and storing the resulting information;
Figure 2 is a schematic illustration of an apparatus for classifying and counting packets;
Figure 3 shows the format of a table of records generated by the apparatus of Fig. 2; and
Figure 4 is an alternative embodiment of the apparatus of Fig. 2.

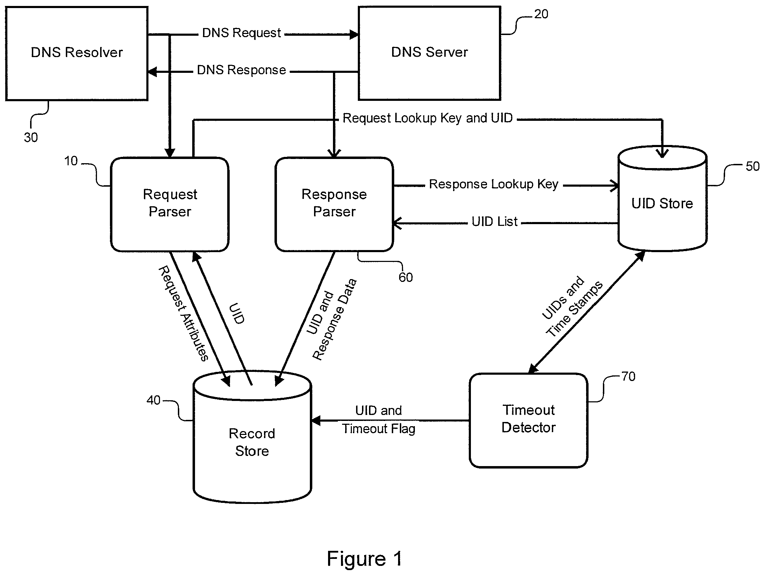

An embodiment of the invention will now be described with reference to Fig. 1. A Request Parser 10 receives copies of traffic being sent to a DNS Server 20 across a communications network, such as the internet, in this example from DNS Resolver 30. The Request Parser 10 incorporates a packet capture device (input) configured to receive all packets whose User Datagram Protocol (UDP) or Transmission Control Protocol (TCP) headers indicate that the packet is a DNS packet. Such packets will have a "source port" and/or "destination port" data field containing a value of 53 as defined by RFC 1035.

The Request Parser 10 parses the request into its individual attributes, as described in the relevant network communications protocol specifications (e.g. RFC 791 for IPv4, RFC 768 for UDP, RFCs 1034 and 1035 for DNS). These specifications describe what attributes a packet will contain and may also specify for some attributes all possible values that the attribute may have.

Copies of certain attributes of the request, along with a timestamp (e.g. the time of capture), are stored as a single record in Record Store 40. Record Store 40 allocates a Unique Identifier (UID) to this record which is communicated to the Request Parser 10. Whilst it would be possible to store every attribute, in practice some attributes are of no operational importance and reducing the set of attributes to the minimum required can substantially reduce the storage requirements.

The Request Parser 10 creates a Lookup Key containing the following attributes that are used to identify the corresponding response:
- IP protocol version (i.e. IPv4 or IPv6)
- Layer 4 protocol (i.e. UDP or TCP)
- Remote IP address
- Remote port number
- Local IP address
- Local port number
- DNS request ID

The packet's UID and timestamp are stored in UID Store 50 using the Lookup Key to index them. If more than one outstanding request matches the same Lookup Key then the result will be that a list of UIDs and capture times will be stored against that Lookup Key. This ensures that, in the event of two or more identical requests being captured without an intervening corresponding response being captured, each subsequent response can be correctly assigned to a request, chronologically, as described below.

A Response Parser 60 receives copies of traffic being sent from a DNS Server 20 across a communications network. The Response Parser 60 incorporates a packet capture device configured to receive all DNS packets in the same way as the Request Parser 10.

The Response Parser 60 parses the response into its individual attributes, according to the relevant network communications protocol specifications, in the same way as the Request Parser 10.

Instead of the Request Parser 10 and Response Parser 60 having separate packet capture devices (inputs) they may instead share a single packet capture device and determine whether a packet should be handled by the Request Parser 10 or Response Parser 60 by examining the value of the QR ("Query Response") bit in the DNS protocol header of each packet.

The Response Parser 10 creates a Lookup Key using the same attributes as the Request Parser 60, such that for corresponding requests and responses the same Lookup Key value is obtained.

The Response Parser 60 queries UID Store 50 using this Lookup Key to obtain the UID and time of capture of the request matching that Lookup Key. In the event of the UID Store 50 containing a list of multiple unmatched requests matching that Lookup Key, then the first (oldest time of capture) outstanding UID and time of capture are obtained. The record for a request (UID and time of capture) is deleted from the UID Store 50 after it has been matched with a response. Using the UID as the key, copies of certain attributes of the response are added to the request record in Record Store 40, along with information recording the elapsed time between the capture of the request and the subsequent capture of the corresponding response, to create a Request-Response record. As for the Request Parser 10, the choice of which attributes to store is a trade-off between operational requirements and data storage requirements.

Instead of adding the response attributes to the request record, an alternate implementation stores the response attributes as a separate record in a second table, where each entry in the request record table and corresponding entry in the response record table share a common key (i.e. the UID). For the purposes of this invention, a pair of records so linked shall be considered a single request-response record.

Periodically a Timeout Detector 70 scans every record in UID Store 50. If the difference between the current system time and the recorded timestamp is more than a pre-defined time limit, the system adds a flag to the request record in Record Store 40 to the effect that no response has been received (such records can then, if required, be considered as Request-Response records in subsequent processing, even though they contain no response information), and deletes the record in UID Store 50. For the DNS protocol an appropriate value for the time limit is 5 seconds, with a scan period of 1 second.

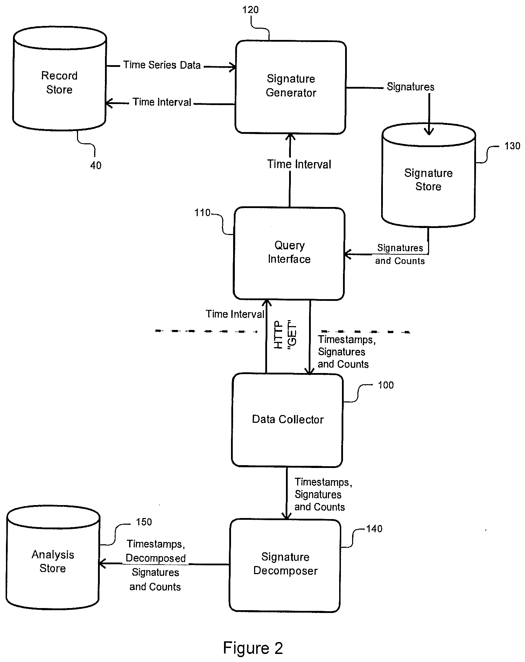

Analysis of the network communications data will now be described with reference to Fig. 2. A Data Collector 100 is instructed to create time series data for a specified time period and with a specified sub-interval (e.g. the previous hour, with 1 minute resolution). The instruction might be the result of a specific enquiry initiated by an end user, or it may be an automatically scheduled operation. This may be described as "on-demand" or "polling" operation.

The Data Collector issues a query (for example, using the HTTP protocol) to a Query Interface 110 containing those time parameters, which in turn passes the time parameters to a Signature Generator 120.

For the specified time period, the Signature Generator 120 retrieves all matching records from Record Store 40, in chronological order.

For each record, the values of particular predetermined attributes (e.g. Query Type, Response Code, IP Protocol Version etc.) are extracted and combined (without loss of information) into a 64-bit integer (hereafter "Signature") thereby collapsing those values into a 1-dimensional representation of those values. This is achieved by recording the values in a fixed order within the signature, with each attribute occupying a specified set of bits. The predetermination of which attributes to use to form the signatures depends on the intrinsic variability of the attributes. Attributes with high intrinsic variability (such that they might be expected to be different on every packet, e.g. Remote Address, Remote Port or DNS Query ID) are less suited than attributes that typically only contain a small range of values, per the examples given above. The same set of attributes is consistently used for every record to form all signatures

The Signature is stored in Signature Store 130, which counts how many times each distinct Signature is observed for each of the smallest sub-intervals of time specified. The use of a 64-bit integer as the "key" in this store is advantageous because it allows for optimal implementation of Signature Store 130 because comparison of integer values is a primitive operation within a CPU. Of course, other bit lengths are contemplated, while still representing every signature as a numerical value for ease of comparison.

Although the signature generation algorithm allows for up to 2⁶⁴ different signatures, in practice the number of distinct signatures observed in short time intervals (e.g. minutes) is only in the region of a few hundred because many of the protocol attributes have a limited range of common values.

At the end of processing data for each sub-interval of the specified time period, the Query Interface 110 retrieves all generated Signatures and counts thereof from Signature Store 130 and returns those values to the Data Collector 100 as the response to the aforementioned query. Signature Store 130 is emptied in readiness for the next sub-interval.

On receipt of the signature count data for a sub-interval; the Data Collector 100 passes this data to the Signature Decomposer 140, which then decomposes the Signature back into its original component attributes, i.e. the signature values are decomposed back into a multi-dimensional representation of the attribute values seen during each measured time interval.

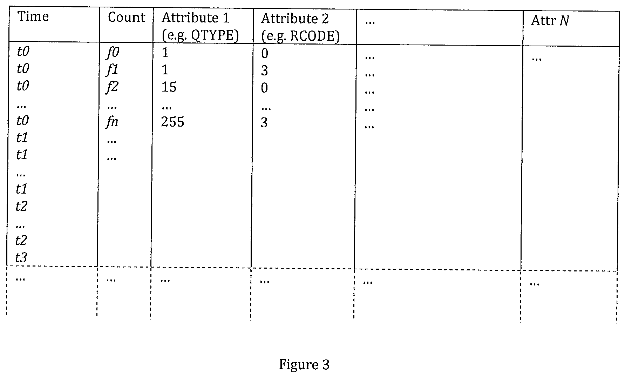

A record is created in Analysis Store 150 for each specified sub-interval and for each distinct Signature. Fig. 3 shows a table of such records; each row is one record representing occurrences of a specific signature for a specific time sub-interval. Each record contains the time value representing the start of the sub-interval (*t0, t1, t2...*), the original attribute values (the numerical value of each attribute), and the count of the number of times that particular combination of values (signature) was observed (*f0, f1, f2*...). This representation may be efficiently sliced (such that attributes not currently of interest are ignored) or filtered, such that the frequency distribution only includes those DNS queries whose attributes match (or do not match) specified values.

Once records for each sub-interval for the specified time period have been added to Analysis Store 150, the user can conduct multi-dimensional analysis of this information, for example using known analysis tools such as pivot tables.

The invention can enable the efficient creation of time series data sets (i.e. number of occurrences per specified time interval, or "frequency distribution") of attributes of a network protocol request (or request / response pair) where each time series may be filtered by the contents of any other attribute or combination thereof.

For example, the invention can be used to generate time series of:
- The frequency of DNS requests for an "MX record" (which specifies the location of the mail server for a domain name) that resulted in an "NXDomain" response code (which indicates that the domain name to which the request related does not exist).
- The relative frequency distribution of all observed values of the "Query Type" attribute for all DNS queries sent with the "DNSSEC OK" flag that were transmitted using the UDP/IP protocol and that resulted in a truncated response.

The generated time series information can be displayed graphically.

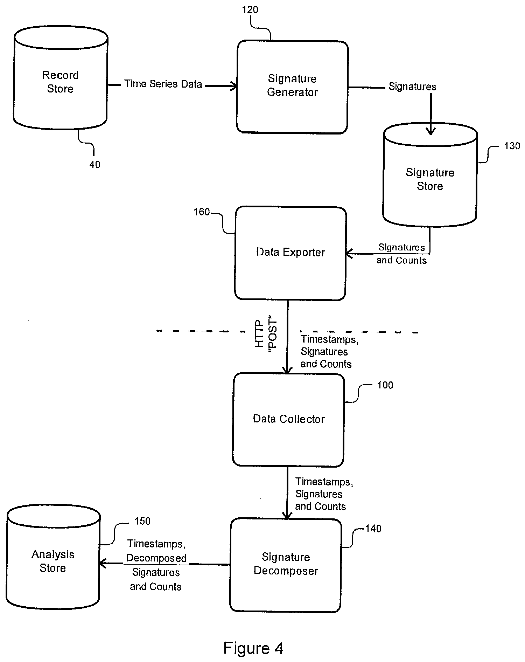

An alternative embodiment is illustrated in Fig. 4, which is a modified version of Fig. 2 in which like parts are given like reference numerals; repeated description thereof will be omitted. In this alternative embodiment, the Signature Generator 120 runs autonomously and the Query Interface is replaced with a Data Exporter 160. The Record Store 40 forwards records to the Signature Generator 120 in real time and generates Signatures as described above and passes those Signatures to Signature Store 130 for counting. This may be described as "real-time" or "push" operation.

At a pre-determined interval (typically one minute) the Data Exporter 160 retrieves all generated Signatures and counts thereof from Signature Store 130 and then initiates an export of those values to the Data Collector 100. Signature Store 130 is emptied in readiness for the next sub-interval.

On receipt of data from the Data Exporter 160, the Data Collector 100 then proceeds with signature decomposition by the Signature Decomposer 140 and storage in Analysis Store 150 as described above.

Although the embodiments of Figs. 2 and 4 are shown as using records from Record Store 40, this is not essential. For example, data can be delivered to the Signature Generator 120 directly from a communications network or indirectly via other apparatus not necessarily as illustrated in Fig. 1. Furthermore, the records received by the Signature Generator 120 are not limited to being derived from network communications based on requests and responses, but could be any time-based network communications data with associated attributes. Each set of attributes, having a particular timestamp (such as time of capture), obtained from a store of directly from a network, is referred to as a unit of data, and could be, but is not limited to being, a network data packet.

The embodiments described above store the count data in Analysis Store 150 for each signature for each specified time sub-interval (smallest time resolution, such as 1 second). However, to efficiently and rapidly produce time series of much longer time periods, an aggregator (not shown) is preferably provided which automatically periodically aggregates the data into progressively coarser time intervals (for example 10, 600, 3600 and 86400 seconds) and also stores the resulting information as tables. These tables have the same format as Fig. 3, with one row per (aggregated) time interval per signature, but with the count field being the sum of the counts for that signature from multiple shorter time intervals (e.g. from *t0 - t9*). When further analysis is performed, the optimal resolution required to present the frequency distribution for any requested time period can automatically be selected.

All of the features described above by reference to the Domain Name System (DNS) network communications protocol could equally be applied by a person skilled in the art, without departing from the scope of the invention, to alternative network communications protocols, such as Simple Network Management Protocol (SNMP, described in RFC 1441) and Remote Authentication Dial In User Service (RADIUS, described in RFC 2865).

It is possible to implement each of the various items in Figs. 1, 2 and 4 as dedicated hardwired electronic circuits; however the various items do not have to be separate from each other, and some or all could be integrated onto a single electronic chip. Furthermore, the items can be embodied as a combination of hardware and software, and the software can be executed by any suitable general-purpose microprocessor, such that in one embodiment the apparatus can be a conventional personal computer (PC) or server, such as a standard desktop or laptop computer with an attached monitor, with connection to the desired communications network. Alternatively, the apparatus can be a dedicated device.

The invention can also be embodied as a computer program stored on any suitable computer-readable storage medium, such as a solid-state computer memory, a hard drive, or a removable disc-shaped medium in which information is stored magnetically, optically or magneto-optically. The computer program comprises computer-executable code that when executed on a computer system causes the computer system to perform a method embodying the invention.

## Claims

1. A method of monitoring traffic, in a communications network, comprising:
obtaining network protocol requests sent over said network;
obtaining resulting network protocol responses sent over said network;
determining which request corresponds to which response; and
storing each request and corresponding response pair as a single request-response record, **characterized in that**:
the requests are DNS requests, and the responses are DNS responses, and by further comprising:
for each received request: storing predetermined attributes of the request as a record, and allocating a unique identifier to the record;
including the time of capture of the request in each record;
for each request: creating a request lookup key from specific attributes of the request, and storing a list of the unique identifier and time of capture for each request, indexed by the lookup key;
for each response:
creating a response lookup key from specific attributes of the response, corresponding to attributes of the request used to create each request lookup key;
looking up a unique identifier in said list having a request lookup key corresponding to the response lookup key; and
storing predetermined attributes of the response together with the stored predetermined attributes of the request with the corresponding unique identifier looked up in the list to create the request-response record,
wherein if multiple items are found in the list all with the same request lookup key corresponding to the response lookup key, then the item with the oldest time of capture is selected and the corresponding unique identifier is used to determine the request that corresponds to the response.

2. A method according to claim 1, wherein after a unique identifier has been obtained from the list by using a response lookup key, that item is removed from the list.

3. A method according to claim 1 or 2, wherein, if more than a predetermined period of time has elapsed since an item was added to said list, then that item is removed from the list.

4. A method according to any preceding claim, wherein the step of storing predetermined attributes of the response to create the request-response record, comprises adding predetermined attributes of the response to the record already created from predetermined attributes of the request.

5. A method according to any preceding claim, further comprising retrieving and outputting stored request-response records for analysis in response to a query.

6. A method according to any preceding claim wherein said method is computer-implemented.

7. A computer program comprising computer-executable code that when executed on a computer system causes the computer system to perform a method according to any one of the preceding claims.

8. A computer program product, directly loadable into the internal memory of a digital computer, comprising software code portions for performing the method of any one of the preceding claims when said product is run on a computer.

9. An apparatus for monitoring traffic, in a communications network, comprising:
an input configured to obtain network protocol requests sent over said network and resulting network protocol responses sent over said network;
a processor configured to determine which request corresponds to which response; and
a store (40) arranged to store each request and corresponding response pair as a single request-response record, **characterized in that**:
the requests are DNS requests, and the responses are DNS responses, and the processor is further configured to:
for each received request: store predetermined attributes of the request as a record, and allocate a unique identifier to the record;
include the time of capture of the request in each record;
for each request: create a request lookup key from specific attributes of the request, and store a list of the unique identifier and time of capture for each request, indexed by the lookup key;
for each response:
create a response lookup key from specific attributes of the response, corresponding to attributes of the request used to create each request lookup key;
look up a unique identifier in said list having a request lookup key corresponding to the response lookup key; and
store predetermined attributes of the response together with the stored predetermined attributes of the request with the corresponding unique identifier looked up in the list to create the request-response record,
wherein if multiple items are found in the list all with the same request lookup key corresponding to the response lookup key, then the item with the oldest time of capture is selected and the corresponding unique identifier is used to determine the request that corresponds to the response.

## Patentansprüche

1. Verfahren zum Überwachen von Verkehr in einem Kommunikationsnetzwerk, das Folgendes umfasst:
Erhalten von Netzwerkprotokollanforderungen, die über das Netzwerk gesendet werden;
Erhalten von resultierenden Netzwerkprotokollantworten, die über das Netzwerk gesendet werden;
Bestimmen, welche Anforderung welcher Antwort entspricht; und
Speichern jedes Paares aus Anforderung und entsprechender Antwort als einzelnen Anforderungsantwortdatensatz, **dadurch gekennzeichnet, dass**:
die Anforderungen DNS-Anforderungen und die Antworten DNS-Antworten sind, und dadurch, dass es ferner Folgendes umfasst:
für jede empfangene Anforderung: Speichern vorbestimmter Attribute der Anforderung als Datensatz und Zuordnen einer eindeutigen Kennung zum Datensatz;
Einschließen der Zeit der Erfassung der Anforderung in jeden Datensatz;
für jede Anforderung: Erstellen eines Anforderungsnachschlageschlüssels aus spezifischen Attributen der Anforderung und Speichern einer Liste der eindeutigen Kennung und Zeit der Erfassung für jede Anforderung, indiziert durch den Nachschlageschlüssel;
für jede Antwort:
Erstellen eines Antwortnachschlageschlüssels aus spezifischen Attributen der Antwort, die den Attributen der Anforderung entsprechen, die zum Erstellen jedes Anforderungsnachschlageschlüssels verwendet werden;
Nachschlagen einer eindeutigen Kennung in der Liste, die einen Anforderungsnachschlageschlüssel aufweist, der dem Antwortnachschlageschlüssel entspricht; und
Speichern von vorbestimmten Attributen der Antwort zusammen mit den gespeicherten vorbestimmten Attributen der Anforderung mit der entsprechenden eindeutigen Kennung, die in der Liste nachgeschlagen wurde, um den Anforderungsantwortdatensatz zu erstellen,
wobei, wenn in der Liste mehrere Elemente gefunden werden, die alle denselben dem Antwortnachschlageschlüssel entsprechenden Anforderungsnachschlageschlüssel aufweisen, das Element mit der ältesten Zeit der Erfassung ausgewählt und die entsprechende eindeutige Kennung verwendet wird, um die Anforderung zu bestimmen, die der Antwort entspricht.

2. Verfahren nach Anspruch 1, wobei, nachdem unter Verwendung eines Antwortnachschlageschlüssels eine eindeutige Kennung aus der Liste erhalten wurde, das Element aus der Liste entfernt wird.

3. Verfahren nach Anspruch 1 oder 2, wobei, wenn mehr als ein vorbestimmter Zeitraum vergangen ist, seit ein Element zur Liste hinzugefügt wurde, das Element aus der Liste entfernt wird.

4. Verfahren nach einem der vorhergehenden Ansprüche, wobei der Schritt des Speicherns vorbestimmter Attribute der Antwort, um einen Anforderungsantwortdatensatz zu erstellen, das Hinzufügen vorbestimmter Attribute der Antwort zum Datensatz umfasst, der bereits aus vorbestimmten Attributen der Anforderung erstellt wurde.

5. Verfahren nach einem der vorhergehenden Ansprüche, das ferner das Abrufen und Ausgeben gespeicherter Anforderungsantwortdatensätze zur Analyse in Reaktion auf eine Anfrage umfasst.

6. Verfahren nach einem der vorstehenden Ansprüche, wobei das Verfahren computerimplementiert ist.

7. Computerprogramm, das computerausführbaren Code umfasst, der, wenn er auf einem Computersystem ausgeführt wird, bewirkt, dass das Computersystem ein Verfahren nach einem der vorhergehenden Ansprüche durchführt.

8. Computerprogrammprodukt, das direkt in die interne Speichereinheit eines digitalen Computers ladbar ist und Softwarecodeabschnitte zum Durchführen des Verfahrens nach einem der vorhergehenden Ansprüche umfasst, wenn das Produkt auf einem Computer abläuft.

9. Vorrichtung zum Überwachen von Verkehr in einem Kommunikationsnetzwerk, das Folgendes umfasst:
einen Eingang, der dazu ausgelegt ist, Netzwerkprotokollanforderungen, die über das Netzwerk gesendet werden, und resultierende Netzwerkprotokollantworten, die über das Netzwerk gesendet werden, zu erhalten;
einen Prozessor, der dazu ausgelegt ist zu bestimmen, welche Anforderung welcher Antwort entspricht; und
einen Speicher (40) der angeordnet ist, jedes Paar aus Anforderung und entsprechender Antwort als einzelnen Anforderungsantwortdatensatz zu speichern, **dadurch gekennzeichnet, dass**:
die Anforderungen DNS-Anforderungen und die Antworten DNS-Antworten sind und der Prozessor ferner dazu ausgelegt ist:
für jede empfangene Anforderung vorbestimmte Attribute der Anforderung als Datensatz zu speichern und dem Datensatz eine eindeutige Kennung zuzuordnen;
die Zeit der Erfassung der Anforderung in jeden Datensatz einzuschließen;
für jede Anforderung einen Anforderungsnachschlageschlüssel aus spezifischen Attributen der Anforderung zu erstellen und eine Liste der eindeutigen Kennung und Zeit der Erfassung für jede Anforderung zu speichern, indiziert durch den Nachschlageschlüssel;
für jede Antwort:
einen Antwortnachschlageschlüssel aus spezifischen Attributen der Antwort zu erstellen, die den Attributen der Anforderung entsprechen, die zum Erstellen jedes Anforderungsnachschlageschlüssels verwendet werden;
eine eindeutige Kennung in der Liste nachzuschlagen, die einen Anforderungsnachschlageschlüssel aufweist, der dem Antwortnachschlageschlüssel entspricht; und
vorbestimmte Attribute der Antwort zusammen mit den gespeicherten vorbestimmten Attributen der Anforderung mit der entsprechenden eindeutigen Kennung, die in der Liste nachgeschlagen wurde, zu speichern, um den Anforderungsantwortdatensatz zu erstellen,
wobei, wenn in der Liste mehrere Elemente gefunden werden, die alle denselben dem Antwortnachschlageschlüssel entsprechenden Anforderungsnachschlageschlüssel aufweisen, das Element mit der ältesten Zeit der Erfassung ausgewählt und die entsprechende eindeutige Kennung verwendet wird, um die Anforderung zu bestimmen, die der Antwort entspricht.

## Revendications

1. Procédé de surveillance de la circulation, dans un réseau de communication, comprenant :
l'obtention de demandes de protocole réseau envoyées via ledit réseau ;
l'obtention de réponses de protocole réseau obtenues envoyées via ledit réseau ;
la détermination de savoir quelle demande correspond à quelle réponse ; et
le stockage de chaque demande et la paire de réponses correspondantes sous la forme d'enregistrement unique de réponse à une demande, **caractérisé en ce que** :
les demandes sont des demandes de DNS et les réponses sont des réponses de DNS, et **en ce qu'**il comprend en outre :
pour chaque demande reçue : le stockage d'attributs prédéterminés de la demande sous forme d'enregistrement, et l'attribution d'un identifiant unique à l'enregistrement ;
comprenant le moment de la saisie de la demande dans chaque enregistrement ;
pour chaque demande : la création d'une clé de référence de demande à partir d'attributs spécifiques de la demande, et le stockage d'une liste de l'identifiant unique et du moment de saisie de chaque demande, indexés par la clé de référence ;
pour chaque réponse :
la création d'une clé de référence de réponse à partir d'attributs spécifiques de la réponse, correspondant à des attributs de la demande utilisés pour créer chaque clé de référence de demande ;
la recherche d'un identifiant unique dans ladite liste ayant une clé de référence de demande correspondant à la clé de référence de réponse ; et
le stockage d'attributs prédéterminés de la réponse conjointement avec les attributs prédéterminés stockés de la demande avec l'identifiant unique correspondant recherché dans la liste pour créer l'enregistrement de demande-réponse,
dans lequel, si de multiples éléments sont trouvés dans la liste, tous avec la même clé de référence de demande correspondant à la clé de référence de réponse, l'élément avec le moment de saisie le plus ancien est choisi et l'identifiant unique correspondant est utilisé pour déterminer la demande qui correspond à la réponse.

2. Procédé selon la revendication 1, dans lequel après qu'un identifiant unique a été obtenu à partir de la liste en utilisant une clé de référence de demande, cet élément est retiré de la liste.

3. Procédé selon la revendication 1 ou 2, dans lequel, si plus qu'une période de temps prédéterminée s'est écoulée depuis qu'un élément a été ajouté à ladite liste, alors cet élément est retiré de la liste.

4. Procédé selon l'une quelconque des revendications précédentes, dans lequel l'étape de stockage d'attributs prédéterminés de la réponse pour créer l'enregistrement de demande-réponse, comprend l'ajout d'attributs prédéterminés de la réponse à l'enregistrement déjà créé à partir d'attributs prédéterminés de la demande.

5. Procédé selon l'une quelconque des revendications précédentes, comprenant en outre le retrait et l'émission d'enregistrements de demande-réponse stockés en vue d'une analyse en réponse à une demande.

6. Procédé selon l'une quelconque des revendications précédentes, dans lequel ledit procédé est informatisé.

7. Programme informatique comprenant un code exécutable par ordinateur qui, lorsqu'exécuté sur un système informatique, amène le système informatique à exécuter un procédé selon l'une quelconque des revendications précédentes.

8. Produit de programme informatique, pouvant être chargé directement dans la mémoire interne d'un ordinateur numérique, comprenant des parties de code logiciel en vue d'exécuter le procédé selon l'une quelconque des revendications précédentes lorsque ledit produit est exécuté sur un ordinateur.

9. Appareil destiné à surveiller la circulation, dans un réseau de communication, comprenant :
une entrée configurée pour obtenir des demandes de protocole réseau envoyées via ledit réseau et des réponses de protocole réseau obtenues envoyées via ledit réseau ;
un processeur configuré pour déterminer quelle demande correspond à quelle réponse ;
et
un stockage (40) agencé pour stocker chaque demande et paire de réponses correspondantes sous forme d'enregistrement unique de demande-réponse, **caractérisé en ce que** :
les demandes sont des demandes de DNS et les réponses sont des réponses de DNS et le processeur est en outre configuré pour :
pour chaque demande reçue : stocker des attributs prédéterminés de la demande sous forme d'enregistrement et attribuer un identifiant unique à l'enregistrement ;
inclure le moment de saisie de la demande dans chaque enregistrement ;
pour chaque demande : créer une clé de référence de demande à partir d'attributs spécifiques de la demande, et stocker une liste de l'identifiant unique et du moment de saisie pour chaque demande, indexés par la clé de référence ;
pour chaque réponse :
créer une clé de référence de réponse à partir d'attributs spécifiques de la réponse, correspondant aux attributs de la demande utilisés pour créer chaque clé de référence de demande ;
rechercher un identifiant unique dans ladite liste ayant une clé de référence de demande correspondant à la clé de référence de réponse ; et
stocker des attributs prédéterminés de la réponse conjointement avec les attributs prédéterminés stockés de la demande avec l'identifiant unique correspondant recherché dans la liste pour créer l'enregistrement demande-réponse,
dans lequel si de multiples éléments sont trouvés dans la liste avec la même clé de référence de demande correspondant à la clé de référence de réponse, alors l'élément avec le moment de saisie le plus ancien est choisi et l'identifiant unique correspondant est utilisé pour déterminer la demande qui correspond à la réponse.
